# EUROPEAN PATENT SPECIFICATION

(11) **EP 4 013 704 B1**
(45) Date of publication and mention of the grant of the patent: **09.10.2024**
(21) Application number: 20753473.6
(22) Date of filing: 05.08.2020
(51) Int. Cl.: B65G 17/12, B65G 43/00, B65G 47/57

(54) **ASSEMBLY OF A VERTICAL CONVEYOR AND A FURTHER CONVEYOR, AS WELL AS SUCH A VERTICAL CONVEYOR OR FURTHER CONVEYOR**
MONTAGE EINES SENKRECHTFÖRDERERS UND EINES WEITEREN FÖRDERERS, SOWIE EINER SOLCHE SENKRECHTFÖRDERER ODER EINER WEITERE FÖRDERER
ASSEMBLAGE D'UN CONVOYEUR VERTICAL ET D'UN AUTRE CONVOYEUR, AINSI QU'UN TEL CONVOYEUR VERTICAL OU UN TEL AUTRE CONVOYEUR

(30) Priority: 15.08.2019 NL 2023647
(43) Date of publication of application: 22.06.2022
(73) Proprietor: Qimarox Patenten B.V., 3846 CE Harderwijk (NL)
(72) Inventor: HANNESSEN, Pieter Gerrit, 3841 DJ HARDERWIJK (NL)
(74) Representative: Arnold & Siedsma
(86) International application number: PCT/NL2020/050498
(87) International publication number: WO 2021/029766

(56) References cited:
- GB-A- 190 915 864
- GB-A- 959 725
- JP-A- S6 265 823

## Description

The present invention relates to an assembly of a vertical conveyor and a further conveyor, as well as to such a vertical conveyor or further conveyor.

A vertical conveyor developed and offered by the Applicant is the Prorunner MK5. This is a continuous vertical conveyor, which is specifically suitable for average to high capacity applications. It comprises carriers that are moveable in an endless track, wherein said carriers are configured to transport products between a supply conveyor and a discharge conveyor that are arranged a different height levels. The carrier thus picks up products from the supply conveyor and sets the products down on a discharge conveyor, thereby bridging a height difference.

During use, products may sometimes fall off a carrier and get trapped, possibly causing damage to either one of the assembly as a whole, i.e. to the vertical conveyor, the supply conveyor and/or the discharge conveyor, or to the product.

GB 959 725 A, which is considered the closest prior art, discloses a paternoster elevator having a safety.

The Japanese patent application JP S62 65823 A also discloses a vertical conveyor having a safety. GB 15864 A A.D. 1909 is acknowledged as further prior art.

An objective of the present invention is to provide an assembly, that is improved relative to the prior art and wherein at least one of the above stated problems is obviated.

The invention proposes a solution of a mechanical nature to the problem of how to prevent damage to either one of the assembly as a whole, i.e. to the vertical conveyor, the supply conveyor and/or the discharge conveyor, or to the product. An alternative solution of an electrical! electronic nature, which is not part of the invention, is also described.

Said objective is achieved with the assembly according to claim 1 comprising:
- a vertical conveyor configured to at least one of pick up products from and place products on a transfer section of a further conveyor;
- wherein at least one of the carrier of the vertical conveyor and the transfer section of the further conveyor comprises a safety that is configured to detect a product blocking a carrier of the vertical conveyor and stop the assembly; and
- wherein the safety comprises a pivot that is configured to allow a displacement of at least one of the carrier or of the transfer section to mitigate damage to the assembly and/or to the blocking product.

The assembly according to the invention comprises a mechanical safety that comprises a pivot that is configured to allow a displacement of at least one of the carrier or of the transfer section to mitigate damage to the assembly and/or to the blocking product. In this way, the carrier is incorporated as part of safety means used for detecting a product that would block and thereby impede the operation of the assembly, and that would consequently possibly cause damage to said assembly. The mechanical safety according to the invention provides a simple, reliable and robust safety.

By stopping the assembly as soon as a product blocking the carrier is detected, unnecessary damage to the assembly and/or to the product may be prevented.

Said objective is also achieved with the assembly according to the alternative solution of an electrical/electronic nature, which is not part of the present invention, comprising:
- a vertical conveyor configured to at least one of pick up products from and place products on a transfer section of a further conveyor;
- a safety configured to detect a product blocking a carrier of the vertical conveyor and stop the assembly;
- wherein the safety is an electrical or electronic safety that comprises a measurement apparatus associated with a motor of the assembly, a processor configured to monitor movement of or in the assembly, and a motor drive configured to stop the motor when movement of or in the assembly is detected by the processor to have halted or slowed down to an extent indicative of a blockage; and
- wherein the processor and/or motor drive is configured to reverse the motor relative to a movement thereof before the block, stop or slow-down is detected.

By applying a processor and/or motor drive that is configured to reverse the motor relative to a movement thereof before the block, stop or slow-down is detected, the assembly according to the alternative solution of an electrical/electronic nature allows a blocking product to be liberated and thereafter manually removed.

The invention is also related to a vertical conveyor for such an assembly according to claim 13, comprising a carrier having a safety configured to detect a product blocking a carrier of the vertical conveyor and stop the assembly.

Furthermore, the invention is related to a conveyor for such an assembly according to claim 14, comprising a transfer section that comprises a safety configured to detect a product blocking a carrier of the vertical conveyor and stop the assembly.

Preferred embodiments are the subject of the dependent claims.

In the following description preferred embodiments of the present invention are further elucidated with reference to the drawing, in which:
Figure 1 is a perspective view of an assembly according to the invention, comprising a vertical conveyor, a further conveyor and a safety;
Figure 2 is a frontal view demonstrating a first possible blocking situation;
Figure 3 is a frontal view demonstrating a second possible blocking situation;
Figure 4 is a frontal view demonstrating a third possible blocking situation;

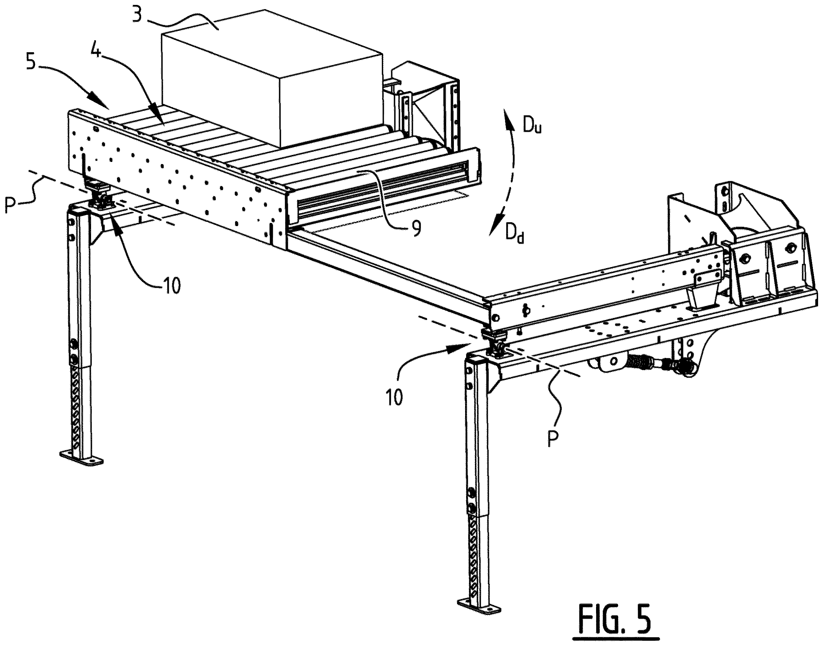

Figure 5 is a perspective view of a transfer section of the further conveyor of the assembly of Figure 1;

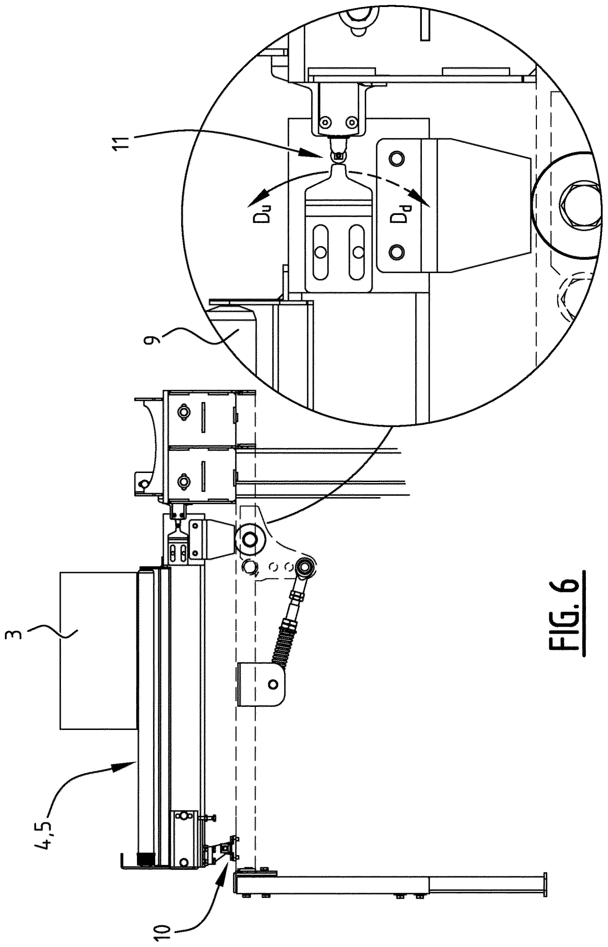

Figure 6 is a detailed frontal view of the transfer section of Figure 5;

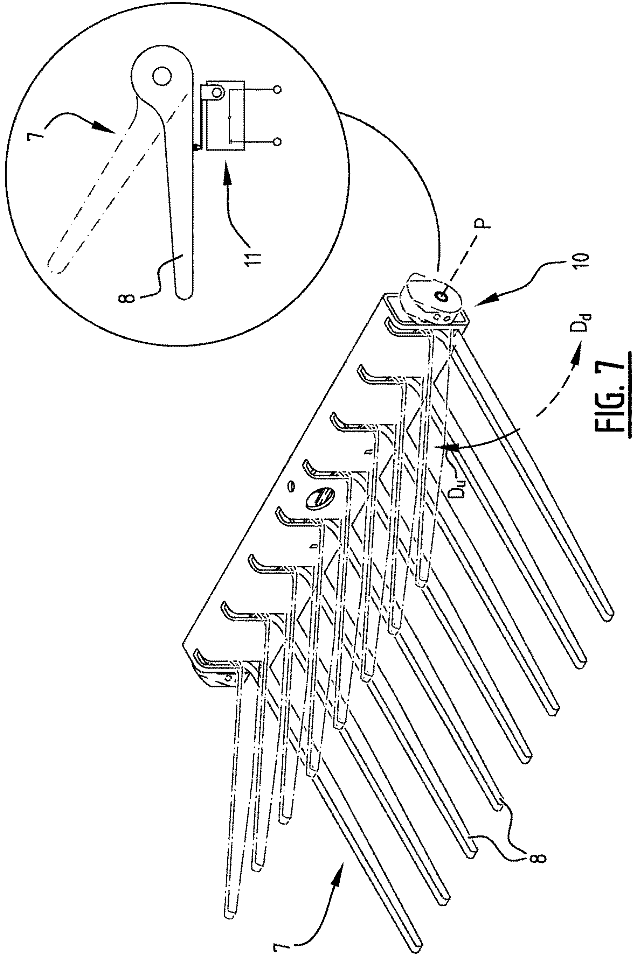

Figure 7 is a perspective view of the carrier of the vertical conveyor that comprises the safety;
Figure 8 shows a schematic representation of an embodiment of a motor control; and
Figure 9 is a more detailed representation of a potential embodiment of a processor forming part of the motor control of Figure 8.

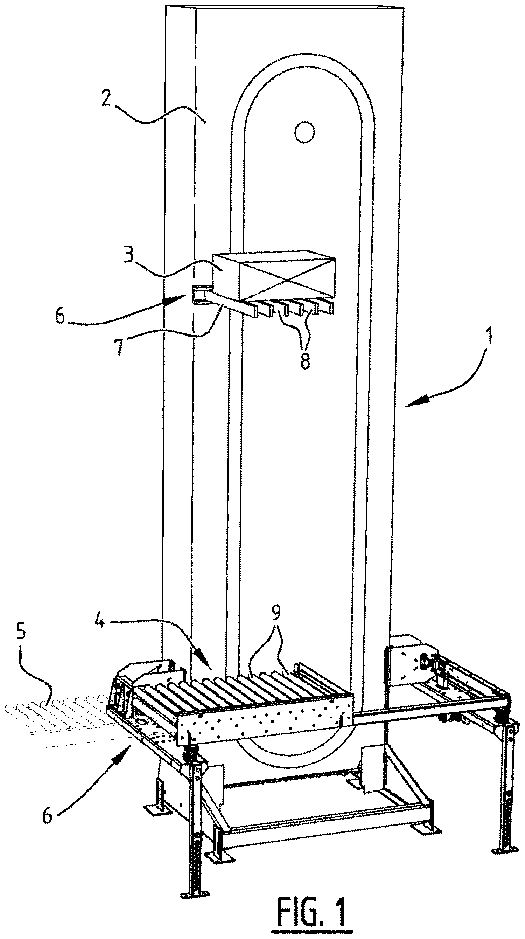

The assembly 1 comprises a vertical conveyor 2 configured to at least one of pick up products 3 from and place products 3 on a transfer section 4 of a further conveyor 5, and a safety 6 configured to detect a product 3, 3-b blocking a carrier 7 of the vertical conveyor 2 and stop the assembly 1 (Figure 1). By stopping the assembly 1 as soon as a product 3, 3-b blocking the carrier 7 is detected, unnecessary damage to the assembly 1, and possibly also to the product 3, 3-b, may be prevented.

The carrier 7 may comprise a fork shape, wherein the teeth 8 of the fork shaped carrier 7 are configured to pass through spaces between adjacent rollers 9 of the further conveyor 5, which may be a roller track but is not limited thereto. In this way, the carrier 7 may place a product 3 when the carrier 7 moves downward and passes the transfer section 4 of the further conveyor 5. Conversely, the carrier 7 may pick up a product 3 from the transfer section 4 of the further conveyor 5 if a product 3 is present on said transfer section 4 and the carrier 7 moves upward and passes the transfer section 4.

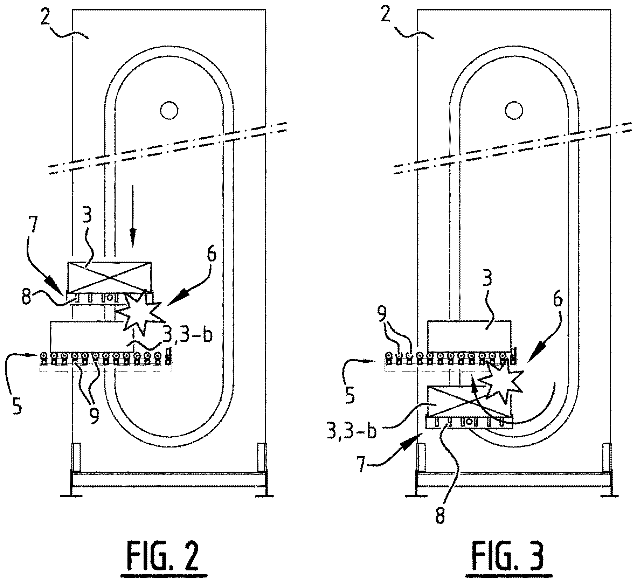

A product 3, 3-b blocking a carrier 7 of the vertical conveyor 2 may occur in a variety of situations as shown in Figures 2-4.

In a first blocking situation as shown in Figure 2, the carrier 7 carries a product 3 and moves downward to place the product 3 on the transfer section 4. However, a further product 3, 3-b that is still present on the transfer section 4 may be blocking the downward travel of the carrier 7.

In a second blocking situation as shown in Figure 3, the carrier 7 moves upward towards the transfer section 4 of the further conveyor 5 to pick up a product 3. It may occur that the carrier 7 still inadvertently carries a further product 3, 3-b. For example, said further product 3, 3-b may accidentally not have been placed down, or said further product 3, 3-b may even have fallen onto the carrier 7. In all cases, said further product 3, 3-b that is inadvertently carried by carrier 7 will block the carrier 7 when said further product 3, 3-b is trapped between the upward moving carrier 7 and the transfer section 4 of the further conveyor 5.

In order to deal with blocking situations of the first and second type described above and shown in Figures 2 and 3 respectively, the safety 6 may be configured to detect a product 3, 3-b blocking between the carrier 7 of the vertical conveyor 2 and the transfer section 4 of the further conveyor 5.

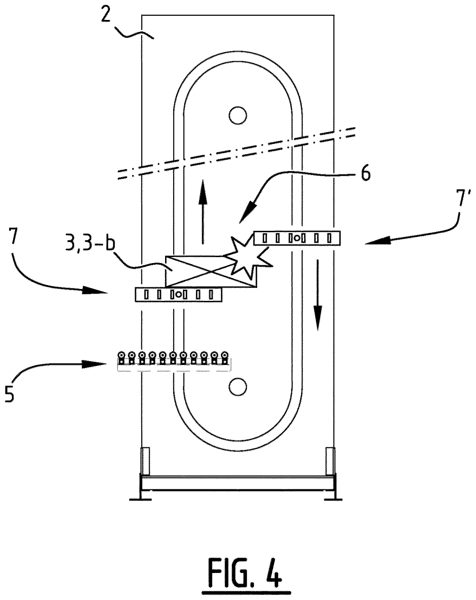

In a third blocking situation as shown in Figure 4, the carrier 7 may carry a product 3, 3-b that extends sideways beyond the carrier 7 to such an extent that it interferes with a travel path of a further carrier 7' that travels in an opposite direction as carrier 7. The product 3, 3-b may get trapped between the two approaching carriers 7, 7'.

In order to deal with this third type of blocking situation shown in Figure 4, the safety 6 may be configured to detect a product 3 blocking between the carrier 7 of the vertical conveyor 2 and a further carrier 7' of the vertical conveyor 2.

Although it is conceivable that the safety 6 comprises contactless sensor, e.g. based on vision, a far more simple, reliable and robust safety 6 may be obtained if the safety is a mechanical safety.

At least one of the carrier 7 of the vertical conveyor 2 and the transfer section 4 of the further conveyor 5 comprises the safety 6.

The safety 6 comprises a pivot 10 that is configured to allow a displacement of at least one of the carrier 7 or of the transfer section 4 to mitigate damage to the assembly 1 and/or to the blocking product 3, 3-b.

The pivot 10 of the safety 6 may be configured to allow a displacement Dᵤ, D_{d} around pivot axis P if a blocking causes a force above a predetermined threshold. If the force of the predetermined threshold is set at a level that is higher than a downward gravity force caused by the mass of a product 3, a single safety may be used to detect a blocking in the three types of blocking situations shown in Figures 2-4.

In a more preferred embodiment, the pivot 10 of the safety 6 is configured to only allow an upward displacement Dᵤ. If a downward displacement D_{d} is prevented by the mechanical nature of the pivot 10, the predetermined threshold may set to a significantly lower value than if the threshold needs to be high enough to at least counteract the weight of the heaviest type of product 3 the carrier 7 should be able to carry. Thus, if the pivot 10 only allows an upward displacement Dᵤ, the safety 6 may be set to a more sensitive setting. The sooner the safety 10 detects a product 3, 3-b blocking the carrier 7 and stops the assembly 1, the less damage to the assembly 1 and/or to the blocking product 3, 3-b is likely to occur. This is a benefit for a pivot 10 of both the transfer section 4 and of the carrier 7. A further advantage of the pivot 10 being configured to only allow an upward displacement Dᵤ is of particular importance to carrier 7, because a too far downward displacement D_{d} could result in a product 3 sliding and falling off of the carrier 7. Such a falling product 3 may damage, may cause further blocking situations similar to Figure 3, and may possibly even cause unsafe situation for human operators.

If both the carrier 7 of the vertical conveyor 2 and the transfer section 4 of the further conveyor 5 comprise the safety 6, all blocking situations shown in Figures 2-4 may be effectively blocked with pivots 10 that are configured to only allow an upward displacement Dᵤ. After all, in the Figure 2 situation the carrier 7 may displace upwardly, whereas the transfer section 4 of the further conveyor 5 may displace, i.e. pivot, upward in the Figure 3 situation. In the blocking situation of Figure 4, the further carrier 7, which is identical to carrier 7, may displace, i.e. pivot, upward. Thus, in a preferred embodiment, each of the carrier 7 (and possibly further carriers 7') and the transfer section 4 comprises a pivot 10 that only allows an upward displacement Dᵤ.

A very simple, reliable and robust assembly 1 is obtained if the safety 6 comprises a switch 11. The switch 11 may be configured to stop the assembly 1 by breaking an electrical circuit or providing an electrical signal if the safety 6 detects a product 3, 3-b blocking a carrier 7, 7' of the vertical conveyor 2.

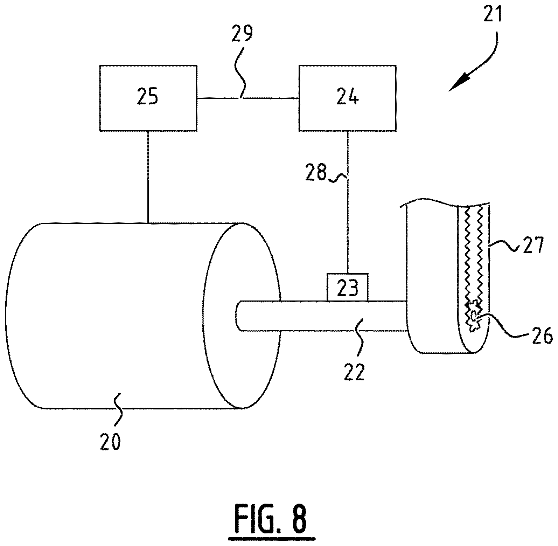

In Figure 8 a motor control 21 is shown, for controlling a motor 20 having an output shaft 22. Output shaft 22 of motor 20 has a tooth wheel 26 at an end thereof to rotationally propel a drive belt 27, connected to the assembly in any of the foregoing figures. Alternatively, a chain or direct drive may be implemented, instead of belt 27.

Control 21 comprises an encoder 23, which is associated with motor shaft 22. Encoder 23 measures rotation of shaft 22. Preferably, encoder 23 is a high resolution encoder, which may, for example, generate 1K pulses for a full 360° rotation, but lower resolution encoders, or other measurement equipment may be employed instead of encoder 23. A measurement signal is provided by encoder 23 to a processor 24, which may be configured to detect, from the measurement signals, whether the device is blocked or excessively loaded, causing slow down or stop of the assembly.

When a block, stop or slow down is detected by processor 24 from measurement signals from encoder 23, it generates appropriate control signals for a motor drive 25, to stop the motor 20.

In a preferred embodiment, processor 24 and/or motor drive 25 is configured to reverse motor 20, wherein the reversal is relative to the movement of said motor 20 before the block, stop or slow-down is detected. Thus, blocking product 3, 3-b may be liberated and thereafter manually removed.

The processor 24 may be formed by a CPU of a computer (not shown), or any appropriately programmed PLC (not shown).

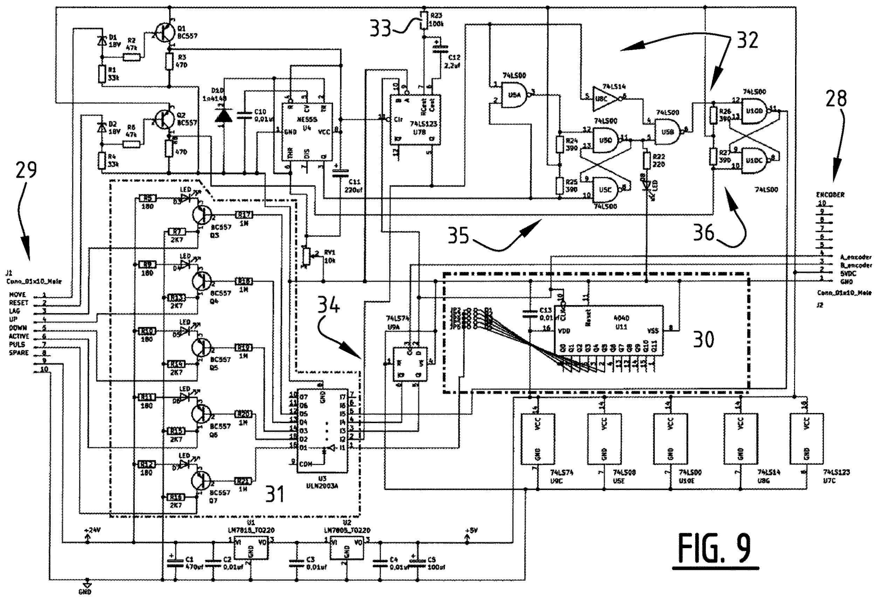

However, in the embodiment of Figure 9, processor 24 is embodied as a hard wired or discrete electronics based configuration, comprising connections 28 for connecting to encoder 23, and connections 29 for connecting to the motor drive 25. A hard wired or discrete electronic configuration may have, as an advantage, of functioning very quickly, without being dependent on software and errors therein and/or delays caused thereby.

Encoder signals on pins 3, 4, of input connections 28 from encoder 23 are adjustable distributed via component block 30 and output via component block 31 through connections 29. A detected movement direction is determined by component block 34 and output on pins 4, 5 for "up" and "down".

A mono-stable multi-vibrator 32, which may be retriggered, generates output signals on pin 6 for "active" of connections 29, during round going movement. Contrary to the indicated fixed resistance R23 33 therein, the pulse duration should be adjustable, and for this resistance R23 33 may be replaced by a variable resistance, and the pulse is output at pin 7 "pulse" of output connections 29. Check of proper round going movement is activated by a first flip-flop stage 35, after the movement active signal is generated and after allowing a lag time, input on pin 3 of the connections 29. A control signal, indicative of slowing down of blockage of the assembly, is generated by second flip-flop stage 35, if the movement active signal falls away in a state of the processor monitoring the proper round going movement. Since the assembly is meant to stop at specific positions, not all control signals from the second flip-flop stage indicate a blockage or unwanted slow down, and the processor may again be set to a monitoring state through a signal on pin 2 for "reset" of connections 29.

The motor drive 25 and the processor 24 may be combined into a single component or assembly of components.

The above described embodiments are intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims. The scope of the invention is defined solely by the following claims.

## Claims

1. Assembly (1), comprising:
- a vertical conveyor (2) and a further conveyor (5) wherein the vertical conveyor is configured to at least one of pick up products (3) from and place products (3) on a transfer section (4) of the further conveyor (5); and
- wherein at least one of a carrier (7) of the vertical conveyor (2) and the transfer section (4) of the further conveyor (5) comprises a safety (6) that is configured to detect a product (3, 3-b) blocking the carrier (7) of the vertical conveyor (2) and stop the assembly (1),
**characterized in that** the safety (6) comprises a pivot (10) that is configured to allow a displacement of at least one of the carrier (7) or of the transfer section (4) to mitigate damage to the assembly (1) and/or to the blocking product (3, 3-b).

2. Assembly according to claim 1, wherein the safety (6) is configured to detect a product (3, 3-b) blocking between the carrier (7) of the vertical conveyor (2) and the transfer section (4) of the further conveyor (5).

3. Assembly according to claim 1 or 2, wherein the safety (6) is configured to detect a product (3, 3-b) blocking between the carrier (7) of the vertical conveyor (2) and a further carrier (7, 7') of the vertical conveyor (2).

4. Assembly according to any of the foregoing claims, wherein the safety (6) is a mechanical safety.

5. Assembly according to any of the foregoing claims, wherein the pivot (10) of the safety (6) is configured to allow a displacement if a blocking causes a force above a predetermined threshold.

6. Assembly according to any of the foregoing claims, wherein the pivot (10) of the safety (6) is configured to only allow an upward displacement.

7. Assembly according to any of the foregoing claims, wherein both the carrier (7) of the vertical conveyor (2) and the transfer section (4) of the further conveyor (5) comprise the safety (6).

8. Assembly according to claim 7, wherein each of the carrier (7) and the transfer section (4) comprises a pivot (10) that allows rotation of the carrier (7) or of the transfer section (4) around a pivot axis thereof, and wherein said pivot (10) only allows an upward displacement.

9. Assembly according to any of the foregoing claims, wherein the safety (6) comprises a switch (11) that is configured to stop the assembly (1) by breaking an electrical circuit or providing an electrical signal if the safety (6) detects a product (3, 3-b) blocking the carrier (7, 7') of the vertical conveyor (2).

10. Assembly according to any of the foregoing claims, wherein the safety (6) comprises an electrical or electronic safety that comprises a measurement apparatus associated with a motor (20) of the assembly (1), a processor (24) configured to monitor movement of or in the assembly (1), and a motor drive (25) configured to stop the motor (20) when movement of or in the assembly (1) is detected by the processor (24) to have halted or slowed down to an extent indicative of a blockage.

11. Assembly according to claim 10, wherein the processor (24) and/or the motor drive (25) are combined into a single electronic component or assembly of electronic components.

12. Assembly according to claim 10 or 11, wherein the processor (24) and/or motor drive (25) is configured to reverse the motor (20) relative to a movement thereof before the block, stop or slow-down is detected.

13. Vertical conveyor for an assembly according to any of the preceding claims, wherein:
- the vertical conveyor (2) is configured to at least one of pick up products (3, 3-b) from and place products (3, 3-b) on a transfer section (4) of a further conveyor (5); and
- wherein a carrier (7) of the vertical conveyor (2) comprises a safety (6) that is configured to detect a product (3, 3-b) blocking the carrier (7) of the vertical conveyor (2) and stop the assembly (1),
**characterized in that** the safety (6) comprises a pivot (10) that is configured to allow a displacement of the carrier (7) to mitigate damage to the assembly (1) and/or to the blocking product (3, 3-b).

14. Conveyor for an assembly according to any of claims 1-12, comprising a transfer section (4) that comprises a safety (6) configured to detect a product (3, 3-b) blocking a carrier (7) of a vertical conveyor (2) and stop the assembly (1),
**characterized in that** the safety (6) comprises a pivot (10) that is configured to allow a displacement of the transfer section (4) to mitigate damage to the assembly (1) and/or to the blocking product (3, 3-b).

## Patentansprüche

1. Anordnung (1), umfassend:
- einen Vertikalförderer (2) und einen weiteren Förderer (5), wobei der Vertikalförderer konfiguriert ist für mindestens eines von einem Aufnehmen von Produkten (3) von einem Transferabschnitt (4) des weiteren Förderers (5) und einem Platzieren von Produkten (3) darauf; und
- wobei mindestens einer von einem Träger (7) des Vertikalförderers (2) und der Transferabschnitt (4) des weiteren Förderers (5) eine Sicherung (6) umfasst, die konfiguriert ist, um ein Produkt (3, 3-b) zu erkennen, das den Träger (7) des Vertikalförderers (2) blockiert und die Anordnung (1) stoppt,
**dadurch gekennzeichnet, dass** die Sicherung (6) einen Schwenkpunkt (10) umfasst, der konfiguriert ist, um eine Verschiebung von mindestens einem des Trägers (7) oder des Transferabschnitts (4) zu ermöglichen, um eine Beschädigung der Anordnung (1) und/oder des blockierenden Produktes (3, 3-b) zu verringern.

2. Anordnung nach Anspruch 1, wobei die Sicherung (6) konfiguriert ist, um ein Blockieren eines Produktes (3, 3-b) zwischen dem Träger (7) des Vertikalförderers (2) und dem Transferabschnitt (4) des weiteren Förderers (5) zu erkennen.

3. Anordnung nach Anspruch 1 oder 2, wobei die Sicherung (6) konfiguriert ist, um ein Blockieren eines Produktes (3, 3-b) zwischen dem Träger (7) des Vertikalförderers (2) und einem weiteren Träger (7, 7') des Vertikalförderers (2) zu erkennen.

4. Anordnung nach einem der vorstehenden Ansprüche, wobei die Sicherung (6) eine mechanische Sicherung ist.

5. Anordnung nach einem der vorstehenden Ansprüche, wobei der Schwenkpunkt (10) der Sicherung (6) konfiguriert ist, um eine Verschiebung zu ermöglichen, falls eine Blockierung eine Kraft über einem zuvor bestimmten Schwellenwert verursacht.

6. Anordnung nach einem der vorstehenden Ansprüche, wobei der Schwenkpunkt (10) der Sicherung (6) konfiguriert ist, um nur eine Aufwärtsverschiebung zu ermöglichen.

7. Anordnung nach einem der vorstehenden Ansprüche, wobei sowohl der Träger (7) des Vertikalförderers (2) als auch der Transferabschnitt (4) des weiteren Förderers (5) die Sicherung (6) umfassen.

8. Anordnung nach Anspruch 7, wobei der Träger (7) und der Transferabschnitt (4) jeweils einen Schwenkpunkt (10) umfassen, der eine Drehung des Trägers (7) oder des Transferabschnitts (4) um eine Schwenkachse herum davon ermöglicht, und wobei der Schwenkpunkt (10) nur eine Aufwärtsverschiebung ermöglicht.

9. Anordnung nach einem der vorstehenden Ansprüche, wobei die Sicherung (6) einen Schalter (11) umfasst, der konfiguriert ist, um die Anordnung (1) durch Unterbrechen eines elektrischen Stromkreises oder Bereitstellen eines elektrischen Signals zu stoppen, falls die Sicherung (6) ein Produkt (3, 3-b) erkennt, das den Träger (7, 7') des Vertikalförderers (2) blockiert.

10. Anordnung nach einem der vorstehenden Ansprüche, wobei die Sicherung (6) eine elektrische oder elektronische Sicherung, die eine Messeinrichtung umfasst, die mit einem Motor (20) der Anordnung (1) verknüpft ist, einen Prozessor (24), der konfiguriert ist, um eine Bewegung von oder in der Anordnung (1) zu überwachen, und einen Motorantrieb (25) umfasst, der konfiguriert ist, um den Motor (20) zu stoppen, wenn die Bewegung von oder in der Anordnung (1) durch den Prozessor (24) in einem Ausmaß als angehalten oder verlangsamt erkannt wird, das auf eine Blockierung hinweist.

11. Anordnung nach Anspruch 10, wobei der Prozessor (24) und/oder der Motorantrieb (25) in eine einzige elektronische Komponente oder Anordnung von elektronischen Komponenten kombiniert sind.

12. Anordnung nach Anspruch 10 oder 11, wobei der Prozessor (24) und/oder der Motorantrieb (25) konfiguriert sind, um den Motor (20) relativ zu einer Bewegung davon umzukehren, bevor die Blockierung, der Stopp oder die Verlangsamung erkannt werden.

13. Vertikalförderer für eine Anordnung nach einem der vorstehenden Ansprüche, wobei:
- der Vertikalförderer (2) konfiguriert ist für mindestens eines von dem Aufnehmen von Produkten (3, 3-b) von einem Transferabschnitt (4) des weiteren Förderers (5) und dem Platzieren von Produkten (3, 3-b) darauf; und
- wobei ein Träger (7) des Vertikalförderers (2) eine Sicherung (6) umfasst, die konfiguriert ist, um ein Produkt (3, 3-b) zu erkennen, das den Träger (7) des Vertikalförderers (2) blockiert und die Anordnung (1) stoppt,
**dadurch gekennzeichnet, dass** die Sicherung (6) einen Schwenkpunkt (10) umfasst, der konfiguriert ist, um eine Verschiebung des Trägers (7) zu ermöglichen, um die Beschädigung der Anordnung (1) und/oder des blockierenden Produktes (3, 3-b) zu verringern.

14. Förderer für eine Anordnung nach einem der Ansprüche 1 bis 12, umfassend einen Transferabschnitt (4), der eine Sicherung (6) umfasst, die konfiguriert ist, um ein Produkt (3, 3-b) zu erkennen, das einen Träger (7) eines Vertikalförderers (2) blockiert und die Anordnung (1) stoppt,
**dadurch gekennzeichnet, dass** die Sicherung (6) einen Schwenkpunkt (10) umfasst, der konfiguriert ist, um eine Verschiebung des Transferabschnitts (4) zu ermöglichen, um die Beschädigung der Anordnung (1) und/oder des blockierenden Produkts (3, 3-b) zu verringern.

## Revendications

1. Ensemble (1), comprenant :
- un convoyeur vertical (2) et un autre convoyeur (5) dans lequel le convoyeur vertical est conçu pour au moins l'un parmi le ramassage de produits (3) et le placement de produits (3) sur une section de transfert (4) de l'autre convoyeur (5) ; et
- dans lequel au moins l'un parmi un transporteur (7) du convoyeur vertical (2) et la section de transfert (4) de l'autre convoyeur (5) comprend un mécanisme de sécurité (6) conçu pour détecter un produit (3, 3-b) bloquant le transporteur (7) du convoyeur vertical (2) et arrêter l'ensemble (1),
**caractérisé en ce que** le mécanisme de sécurité (6) comprend un pivot (10) conçu pour permettre un déplacement d'au moins l'un parmi le transporteur (7) ou la section de transfert (4) afin d'atténuer des dommages causés à l'ensemble (1) et/ou au produit (3, 3-b) causant le blocage.

2. Ensemble selon la revendication 1, dans lequel le mécanisme de sécurité (6) est conçu pour détecter un produit (3, 3-b) causant un blocage entre le transporteur (7) du convoyeur vertical (2) et la section de transfert (4) de l'autre convoyeur (5).

3. Ensemble selon la revendication 1 ou 2, dans lequel le mécanisme de sécurité (6) est conçu pour détecter un produit (3, 3-b) causant un blocage entre le transporteur (7) du convoyeur vertical (2) et un autre transporteur (7, 7') du convoyeur vertical (2).

4. Ensemble selon l'une quelconque des revendications précédentes, dans lequel le mécanisme de sécurité (6) est un mécanisme de sécurité mécanique.

5. Ensemble selon l'une quelconque des revendications précédentes, dans lequel le pivot (10) du mécanisme de sécurité (6) est conçu pour permettre un déplacement si un blocage provoque une force supérieure à un seuil prédéterminé.

6. Ensemble selon l'une quelconque des revendications précédentes, dans lequel le pivot (10) du mécanisme de sécurité (6) est conçu pour ne permettre qu'un déplacement vers le haut.

7. Ensemble selon l'une quelconque des revendications précédentes, dans lequel le transporteur (7) du convoyeur vertical (2) et la section de transfert (4) de l'autre convoyeur (5) comprennent tous deux le mécanisme de sécurité (6).

8. Ensemble selon la revendication 7, dans lequel chacun du transporteur (7) et de la section de transfert (4) comprend un pivot (10) qui permet une rotation du transporteur (7) ou de la section de transfert (4) autour d'un axe de pivotement, et dans lequel ledit pivot (10) ne permet qu'un déplacement vers le haut.

9. Ensemble selon l'une quelconque des revendications précédentes, dans lequel le mécanisme de sécurité (6) comprend un interrupteur (11) configuré pour arrêter l'ensemble (1) en coupant un circuit électrique ou en fournissant un signal électrique si le mécanisme de sécurité (6) détecte un produit (3, 3-b) bloquant le transporteur (7, 7') du convoyeur vertical (2).

10. Ensemble selon l'une quelconque des revendications précédentes, dans lequel le mécanisme de sécurité (6) comprend un mécanisme de sécurité électrique ou électronique qui comprend un appareil de mesure associé à un moteur (20) de l'ensemble (1), un processeur (24) configuré pour surveiller le mouvement de ou dans l'ensemble (1), et un dispositif d'entraînement de moteur (25) conçu pour arrêter le moteur (20) lorsque le processeur (24) détecte qu'un mouvement de ou dans l'ensemble (1) s'est arrêté ou a ralenti dans une mesure indiquant un blocage.

11. Ensemble selon la revendication 10, dans lequel le processeur (24) et/ou le dispositif d'entraînement de moteur (25) sont combinés en un seul composant électronique ou ensemble de composants électroniques.

12. Ensemble selon la revendication 10 ou 11, dans lequel le processeur (24) et/ou le dispositif d'entraînement de moteur (25) est configuré pour inverser le moteur (20) par rapport à un mouvement de celui-ci avant que le blocage, l'arrêt ou le ralentissement ne soit détecté.

13. Convoyeur vertical pour un ensemble selon l'une quelconque des revendications précédentes, dans lequel :
- le convoyeur vertical (2) est conçu pour au moins l'un parmi le ramassage de produits (3, 3-b) et le placement de produits (3, 3-b) sur une section de transfert (4) d'un autre convoyeur (5) ; et
- dans lequel un transporteur (7) du convoyeur vertical (2) comprend un mécanisme de sécurité (6) conçu pour détecter un produit (3, 3-b) bloquant le transporteur (7) du convoyeur vertical (2) et arrêter l'ensemble (1),
**caractérisé en ce que** le mécanisme de sécurité (6) comprend un pivot (10) conçu pour permettre un déplacement du transporteur (7) afin d'atténuer des dommages causés à l'ensemble (1) et/ou au produit (3, 3-b) causant le blocage.

14. Convoyeur pour un ensemble selon l'une quelconque des revendications 1 à 12, comprenant une section de transfert (4) qui comprend un mécanisme de sécurité (6) conçu pour détecter un produit (3, 3-b) bloquant un transporteur (7) d'un convoyeur vertical (2) et arrêter l'ensemble (1),
**caractérisé en ce que** le mécanisme de sécurité (6) comprend un pivot (10) conçu pour permettre un déplacement de la section de transfert (4) afin d'atténuer des dommages causés à l'ensemble (1) et/ou au produit (3, 3-b) causant le blocage.
